# EUROPEAN PATENT APPLICATION

(11) **EP 2 383 991 A1**
(43) Date of publication of application: **02.11.2011**
(21) Application number: 09835974.8
(22) Date of filing: 12.08.2009
(51) Int. Cl.: H04N 5/765

(54) **TV FUNCTION EXPANSION COMPONENT USING GOLD FINGER CONNECTOR**

(30) Priority: 03.01.2009 CN 200910013625
(71) Applicant: Haier Group Corporation, Qingdao Shandong 266101 (CN); Qingdao Haier Electronics Co., Ltd., Shandong 266101 (CN)
(72) Inventor: ZHAI, Yili, Qingdao Shandong 266101 (CN); HU, Xijia, Qingdao Shandong 266101 (CN); LIU, Chao, Qingdao Shandong 266101 (CN); CHEN, Yilong, Qingdao Shandong 266101 (CN); GUO, Jianwei, Qingdao Shandong 266101 (CN); CHEN, Long, Qingdao Shandong 266101 (CN); WANG, Chao, Qingdao Shandong 266101 (CN)
(74) Representative: Thinat, Michel
(86) International application number: PCT/CN2009/073199
(87) International publication number: WO 2010/075687

(57) **Abstract**

A TV function extension assembly is electrically connected with a core circuit of a display apparatus through a gold finger connector. It comprises a function extension module, an external interface, and a memory. The function extension module is connected with the core circuit of the display apparatus through the gold finger connector for mutual communication and data communication. The external interface is connected between the function module and an external device or external network to enable mutual communication and data transmission between the function extension module and the external device or external network. The memory is connected with the function extension module to store data transmitted by the function extension module.

## Description

This application claims priority to Chinese Patent Application No. 200910013625.0, filed on January 3, 2009, entitled "Television Function Extension Assembly with a Gold Finger Connector", which is herein incorporated by reference in its entirety.

### Field of the Invention

The present invention relates to a TV function extension assembly with a gold finger connector, which is applied to TV sets such as Liquid Crystal Display TV (LCD TV), Plasma Display Panel TV (PDP TV). Specifically, the TV function extension assembly is a removable component installed in the TV set which supplies the power to the TV function extension assembly and controls it with simple operations.

### Background of the Invention

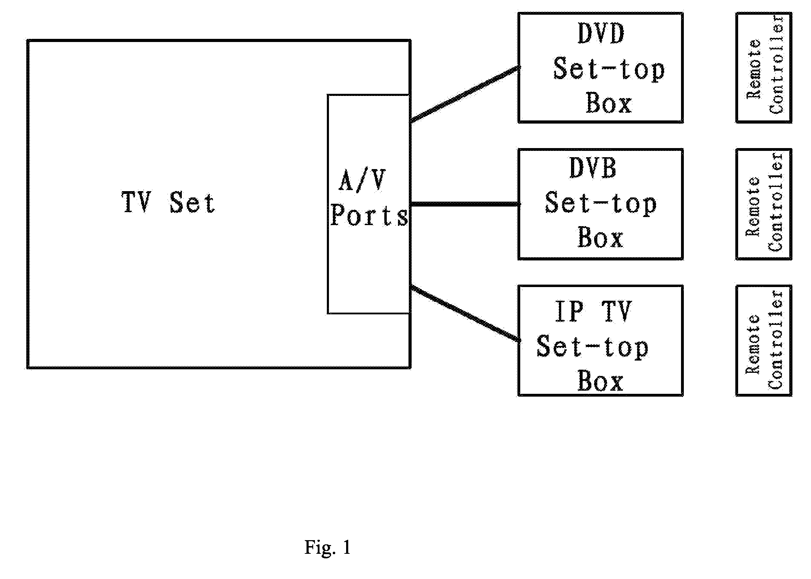

Currently, most TV sets can only receive analog signals. But for digital TV programs, digital signals are received and converted into analog signals (such as A/V (standard video signal) interface signals or Y, U, V (analog component video signals, which are coming out as DVD and satellite digital TV set-top box appear) interface signal) having low display resolution through external devices such as set-top box, DVD (Digital Video Disc), DVB (Digital Video Broadcasting, a type of international digital TV open standards) for being displayed by the analog TV sets. Moreover, as shown in Fig. 1, a TV set connects to a DVD set-top box, a DVB set-top box and an IP (Internet Protocol) set-top box with A/V ports respectively. These three set-top boxes need to be controlled by three independent remote controllers, while the images displayed are still the analog images with low resolution. In addition, due to various types of external devices, there are a lot of redundant components in the devices, for example, each machine needs a power supply, a remote controller, and different products have different output terminals with various numbers and different colors, thus making the installation and use difficult for the end users due to the complexity of connections of the external wires, and occupation of large space. In addition, wire connection has to be repeated as a different device is used. Meanwhile, it is inconvenient to store and operate a plurality of remote controllers. When a user adds a new device which is necessarily a whole machine, the total cost for using is relatively high. Moreover, outputs of the devices are not standard, and interfaces and performances of similar products are quite different.

On the other hand, some expensive digital TV sets have a display mode of a high resolution (1080P, 1080i, 720P), and are connected with the external devices through various types of interfaces, e.g. VGA (Video Graphics Array, a video transmission interface), DVI (Digital Visual Interface, digital video interface), HDMI (High Definition Multimedia Interface). Due to various interfaces provided in the TV set, the output modes of the external devices, such as set-top box, are also diversified. Further, the output signal of the set-top box usually cannot assure that images of the high-end TV set have a perfect quality.

In the prior art, combined TV sets integrate DVD, DVB and IP TV set-top boxes. For example, Chinese Patent No.200420109717.1 discloses an all-in-one machine for TV and DVD, into which a function for playing DVD is integrated, so that the TV set can not only receive TV programs, but also play DVD. For another example, Chinese Patent No.200520115859.3 discloses a recordable integrated IP TV with an IP set-top box built in the liquid crystal television.

In the combined TV sets, however, the DVD, DVB and IP TV set-top boxes are connected with a core circuit of the TV set through different interface circuits. Various types of interfaces neither have a unified standard nor have functions for extending and upgrading, and it is very hard to increase receiving sources of new digital programs. Moreover, various interface types make it difficult to upgrade the existing system. Further, various types of interfaces cannot be adapted to reception of the encryption TV in different regions, and requirements of different information streams in different regions and different operators may hardly be satisfied. The standardization of the host is sacrificed as a specific function, which may not be necessary to all users, is integrated into the host. This host generally is dedicated for particular customers and particular situations, hence it is not suitable for the public, and cannot be popularized. Due to differences between the combined modules of the combined TV set, the product specifications are varied, industry standardization can hardly be performed. Further, related products are not manufactured in the industry easily. Therefore, the production cost is relatively high and the auxiliary products are non-standard.

With the development of the digitalized technique, at present, in the devices such as DVD, DVB and IP TV set-top boxes, all the processes such as read-out and decompression of audio and video signals are performed in a digital manner and the technical standards are normalized. The digital audio and video standard interface (such as HDMI) for the digital TV has been globally popularized. Thus, it is not necessary to transmit the analog signal between these devices and the digital TV any more. It is the general trend to directly transmit standard audio and video digital signals.

In coping with the above shortcomings of the prior art, and overcoming the defects of high cost of TV set manufacturing, non-standardization of auxiliary products, varied specifications of the products in the same category, and the inconvenience for users to purchase, install and use, and in order to comply with the development of the digital TV technique, it is necessary to provide a TV function extension assembly in digital TV standard, with intelligent extension modules, a broad scope of the adaptation and easy upgradeability.

### Summary of the Invention

The object of the present invention lies in providing a TV function extension assembly conforming to the digital TV standard and having a broad scope of the adaptation.

In order to achieve the object, a TV function extension assembly is provided in the present invention. The TV set function extension assembly is electrically connected with a core circuit of a display apparatus through a gold finger connector and comprises a function extension module, an external interface and a memory. The function extension module is electrically connected with the core circuit of the display apparatus through the gold finger connector for mutual communication and transmitting data. The external interface is connected between the function extension module and an external device or external network to enable mutual communication and data transmission between the function extension module and the external device or external network. The memory is connected with the function extension module to store data transmitted by the function extension module.

As adequate consideration is given to the diversity of the digital signal sources, optimal display of the digital TV and capabilities for extending the system, the TV function extension assembly provided in the present invention is designed into modules. The convenient connection and flexible extension for the TV function extension assembly are realized through a combination of modularization of the TV function extension assembly with standardized design of the gold finger connector. Thus, not only can a display standard of a digital TV source be realized, but also different types of digital TV sources such as a digital broadcast source, a digital playing source and a digital network source can be received. In addition, a transition from an analog TV to a digital TV can be accomplished, and functions, such as recordable time retrieving, learning and entertaining, and network download, can be upgraded or added. The consumers just need to choose function modules of the TV function extension assembly complying with the standardized interfaces, so that a combination of the TV function extension assembly having different function modules and the TV set is provided with a low and flexible cost, and an individual assembly is also supported. As the "modularized" configuration is flexible, the consumption sectors for the product are enlarged, new techniques and new products may be performed by adding corresponding developed modules into a system.

### Brief Description of the Drawings

Fig. 1 is a schematic diagram showing a receiving means of a conventional TV set;
Fig. 2 is a block diagram showing a system of a TV set provided in the present invention;
Fig. 3 is a block diagram showing a circuit of a TV set provided in the present invention;
Fig. 4 is a block diagram showing a circuit of a function extension module provided in the present invention; and
Fig. 5 is a flow chart showing the controlling method for the TV set provided in the present invention.

### Detailed Description of Embodiments

Exemplary embodiments of the present invention will be described in detail hereunder with reference to the drawings. In these figures, like reference numbers indicate like elements in different figures.

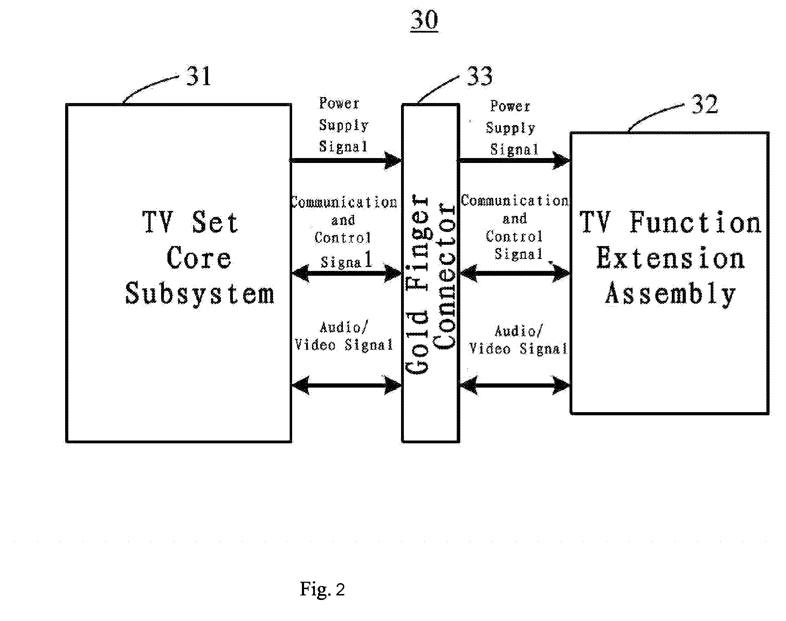

Fig. 2 is a block diagram showing a system of a TV set provided in the present invention.

As shown in Fig. 2, a TV set 30 in the present invention includes a TV set core subsystem 31, a TV function extension assembly 32 and a gold finger connector 33 connected between them. The TV set 30 is provided with a socket (not shown in the figure) corresponding to the gold finger connector 33 for installing the TV function extension assembly 32.

The TV set core subsystem 31, which is a mainboard of the TV set 30 and provided in the TV set 30, may receive audio/video signals in different formats through various external interfaces of the TV set 30. These signals, either analog or digital, include Radio Frequency (RF), Composite Video Broadcast Signal (CVBS), luminance/ chrominance signal (Y/C), color difference signal (Y/Pb/Pr), VGA (Video Graphics Array) signal, DVI (Digital Visual Interface) signal, HDMI (High Definition Multimedia Interface) signal and other existing audio/video signals. The audio/video signals are processed and output to a display panel and video equipment of the TV. The TV set core subsystem 31 may be cooperated with various types of TV function extension assembly 32 through the gold finger connector 33.

The TV function extension assembly 32 can extend functions of the TV set 30, and is electrically connected to and communicates data with the TV set core subsystem 31 through the gold finger connector 33. The TV function extension assembly 32 with a uniform external dimension and a uniform interface definition may be used together with the TV set core subsystem 31 and be installed to or removed from the TV set 30 through the gold finger connector 33. The TV function extension assembly 32 has module circuits with different functions for performing different functions. In the embodiments of the present invention, the TV function extension assembly 32 is provided in a form of extension card, while the person skilled in the art could understand the TV function extension assembly 32 in other forms, such as extension box, according to the disclosure of the present invention.

The TV function extension assembly 32 in the present invention may be, but not limited to, assemblies in the following forms: recordable time-retrieving extension card, which may play a high definition video and record video; learning and entertaining extension card, which may be used for learning English and playing games; digital TV extension card, which may replace the set-top box to play digital signals; network download extension card, which may be used for downloading films from the internet, etc. The TV set 30 supporting the TV function extension assembly 32 may realize different functions with different TV function extension assemblies 32.

The gold finger connector 33 includes a socket terminal and a socket notch (not shown in the figure). The socket terminal is provided on the TV function extension assembly 32. The socket notch is provided in a socket of the TV set 30 and is electrically connected with the TV set core subsystem 31. The socket notch may be used for fixing the socket terminal provided on the TV function extension assembly 32. The socket terminal includes a first power supply signal terminal, a first control signal terminal and a first audio/video signal terminal. The socket notch includes a second power supply signal terminal, a second control signal terminal and a second audio/video signal terminal that are configured for being electrically connected with first power supply signal terminal, first control signal terminal and first audio/video signal terminal of the socket terminal, respectively.

In another embodiment of the present invention, the position relationship between the socket terminal and the socket notch may be exchanged. That is, the socket notch is provided on the TV function extension assembly 32, while the socket terminal is provided in the socket of the TV set 30 and electrically connected with the TV set core subsystem 31.

Compared with the TV function extension assemblies 32 having different functions, corresponding gold finger connectors 33 have socket terminals and socket notches with a uniform specification. The specification herein not only indicates the socket terminal and the socket notch have the same arrangement of electrical signals, but also indicates they have a uniform dimension in physical sizes.

As shown in Fig. 2, signals transmitted by the gold finger connector 33 in the present invention at least include a power supply signal, a communication and control signal and an audio/video signal. As the signals transmitted by the gold finger connector 33 in the present invention include the power supply signal, the TV set 30 can supply power to the TV function extension assembly 32 through the power supply signal. Moreover, a control information communicating mechanism is established between the TV function extension assembly 32 and the TV set 30 through the communication and control signal for coordinating their operation so as to transmit the audio/video signal between the TV set core subsystem 31 and the TV function extension assembly 32.

While the gold finger connector 33 in the present invention standardizes the outputs of the power supply signal, the communication and control signal and the audio/video signal with the socket terminal and the socket notch with the uniform specification, it also normalizes the physical dimension of the extension interfaces in the TV set 30, connecting and fixing the TV function extension assembly 32 on the gold finger connector 33 by way of socket.

In the present invention, as full consideration is giver to the diversity of the digital signal sources, optimal display of the digital TV and capabilities for extending the system, the TV function extension assembly 32 provided in the present invention is designed into modules. The convenient connection and flexible extension for the TV function extension assembly 32 are realized through a combination of modularization of the TV function extension assembly with standardized design of the gold finger connector 33. Thus, not only can a display standard of a digital TV source be realized, but also different types of digital TV sources such as a digital broadcast source, a digital playing source and a digital network source can be received. In addition, a transition from an analog TV to a digital TV can be accomplished, and functions, such as recordable time retrieving, learning and entertaining, and network download, can be upgraded or added. The consumer just needs to choose function modules of the TV function extension assembly 32 complying with the standardized interfaces, so that a combination of the TV function extension assembly 32 having different function modules and the TV set 30 is provided with a low and flexible cost, and an individual assembly is also supported. As the "modularized" configuration is flexible, the consumption sectors for the product are enlarged, new techniques and new products may be performed by adding corresponding developed modules into a system.

Next, the TV function extension assembly 32 of a TV set with different function modules in embodiments of the present invention will be described in detail.

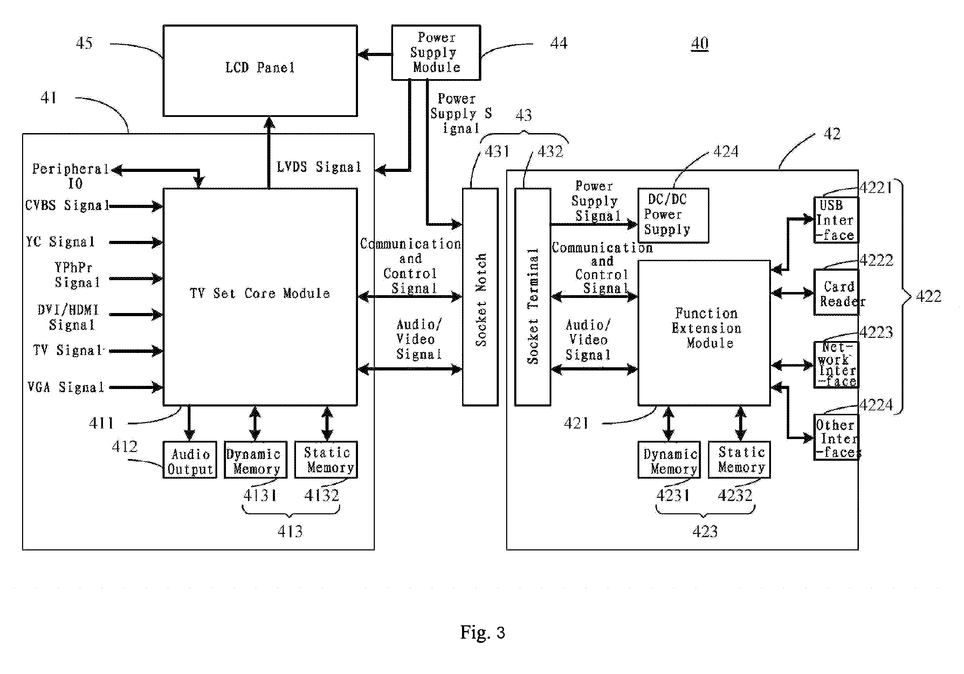

Fig. 3 is a block diagram showing a circuit of a TV set provided in the present invention.

Specifically, the TV function extension assembly may be, but not limited to, an extension card. In the present embodiment, the TV function extension assembly is taken as an example of an extension card to illustrate a circuit composition of the TV set in the present invention. With reference to Fig. 3, a TV set 40 in the present invention includes a TV set core subsystem 41, an extension card 42, a gold finger connector 43 connected between the TV set core subsystem 41 and the extension card 42, a power supply module 44 and an LCD (Liquid Crystal Display) panel 45. Specifically, the power supply module 44 is electrically connected with the TV set core subsystem 41 and the LCD panel 45 to which an operating voltage is supplied, and supplies an operating voltage to the extension card 42 through the gold finger connector 43. The power supply module 44 may also be integrated in the TV set core subsystem 41.

The TV set core subsystem 41, which is the mainboard of the TV set 40 and provided in the TV set 40, includes function modules such as a TV set core module 411, an audio output 412 and memories 413.

The TV set core module 411 includes a plurality of function units such as a microprocessor, a graphics processor, a video processing unit, an audio processing unit, a demodulator, a decoder, a data communication bus, I/O (Input/Output) interface etc. The TV set core module 411 may receive audio/video signals in different formats through various external interfaces of the TV set 4. As shown in Fig. 3, these signals, either analog or digital, include audio/video analog signals or digital signals such as CVBS signal, Y/C signal, Y/Pb/Pr signal, DVI signal, HDMI signal, TV signal and VGA signal. The TV set core module 411 is connected and communicates with external devices through peripheral I/O interfaces. The communication may be performed in various manners such as General Purpose I/O Interface (GPIO), Pulse Width Modulation (PWM), Universal Asynchronous Receiver/Transmitter (UART) and Infrared (IR). The TV set core module 411 processes the received signals in different formats, converts video signals to LVDS (low voltage differential signaling) signals, outputs the converted signals to the LCD panel 45 to display an image, and outputs audio signals to the audio output 412 for sound producing.

The video output 412 is configured for converting audio signals in form of electrical signals to sound signals in form of air vibration, which is an audio device such as a trumpet and a loudspeaker.

The memories 413, as the data storing units of the TV set core module 411, may store the audio/video signal data, and communication and control signal data. They include a dynamic memory 4131 and a static memory 4132. The static memory 4132, which is a fixed-allocated memory, is generally configured for storing global variables or un-encoded data, instructions, etc., such as a Flash. The dynamic memory 4131, which is a memory allocated according to requirements, is generally configured for storing formal parameters of a function, automatic variables or data, instructions allocated in operation, etc., such as a Dynamic Random Access Memory (DRAM) inclusive of DDR (Double Data Rate) and SDR (Memory Data Register).

With reference to Fig. 3, the gold finger connector 43 includes a socket notch 431 and a socket terminal 432. The socket notch 431 may be provided on the TV set core subsystem 41 or provided separately on an adapter panel. The configuration manner of the socket notch 431 may be changed according to the setting of the extension card 42 in the TV set 40 so as to reduce the volume and weight of the TV set 40. The TV set core module 411 is electrically connected with the socket notch 431 and transmits the communication and control signals such as UART (Universal Asynchronous Receiver/Transmitter)/IIC (Inter-Integrated Circuit)/IR (Infrared) communication signals, etc., audio/video signals to the socket notch 431. The power supply module 44 is also electrically connected to the socket notch 431 to supply a power supply signal (e.g. voltage signals of 12V/5V/3V).

The socket terminal 432 is provided on the extension card 42 and may be a gold finger socket made of a printed circuit board. When the socket terminal 432 is inserted in the socket notch 431, their conductive parts contact with each other to form an electrical connection, so that the communication and control signals, audio/video signals and power supply signals are transmitted to the extension card 42. The conductive part of the socket terminal 432 has a surface plated with gold, and results in good conductivity, wear resistance and antioxidation.

The extension card 42 includes a function extension module 421, external interfaces 422, memories 423 and a DC/DC power supply 424 provided on a printed circuit board (PCB).

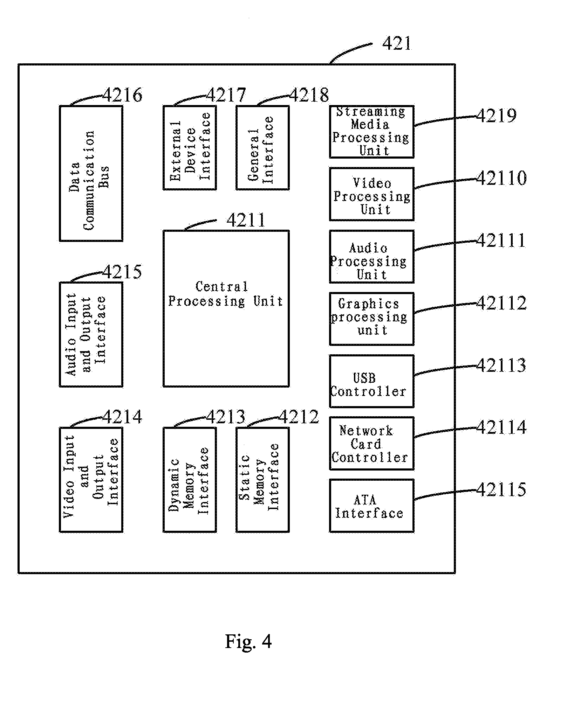

The function extension module 421, which is a core part of the extension card 42, includes a processor and various function units. It receives the communication and control signals and audio/video signals input from the socket terminal 432, or data signals input from the external interfaces 422, then performs operations such as executing, processing and calculating the signals, and feeds the processing result or data back to the TV set core module 411 or outputs it to external devices or external networks connected with the external interfaces 422. The internal units of the function extension module will be described in the following with reference to Fig. 4.

The external interfaces 422 include any one or a combination of at least two selected from a Universal Serial Bus interface (USB interface) 4221, a card reader 4222, a network interface 4223 and other interfaces 4224. The USB interface 4221 is configured for connecting a USB memory or other serial communication device having the USB interface. The card reader 4222 may read plural memory cards of different types. The network interface 4223 may be connected with different types of external networks such as Ethernet, telephone network, cable network, optic fiber network and may be the interface in different manners such as RJ-45, RJ-11, parallel port (LPT port), SC port (optic fiber port), and coaxial port. The other interfaces 4224 have different types such as IDE (Integrated Device Electronics) interface, ATA/SATA (Advanced Technology Attachment/Serial Advanced Technology Attachment, parallel/serial hardware driver) interface, mouse interface, keyboard interface, game handle interface or microphone interface which are connected with a hard disk or optical driver.

The memories 423, as the data storing units of the function extension module 421, may store the audio/video signal data, and communication and control signal data. The memories include a dynamic memory 4231, which may be a Flash; and a static memory 4232, which may be a Dynamic Random Access Memory (DRAM) such as DDR (Double Data Rate) and SDR (Memory Data Register).

The DC/DC power supply 424 receives a power supply signal (12V) input from the socket terminal 432, and functions as a switching power supply for performing a boost/buck operation to the input power supply signal to convert it to fixed voltages output to the function extension module 421, external interfaces 422 and memories 423 thereby supplying appropriate operating voltages to each part.

Fig. 4 is a block diagram showing a circuit of a function extension module provided in the present invention.

As shown in Fig. 4, the function extension module 421 according to the present invention includes a plurality of function units that may be divided into two types, i.e., processing units and interface units. The processing units include any one or a combination of at least two selected from a central processing unit 4211, a streaming media processing unit 4219, a video processing unit 42110, an audio processing unit 42111 and a graphics processing unit 42112. The interface units include any one or a combination of at least two selected from a static memory interface 4212, a dynamic memory interface 4213, a video input and output interface 4214, an audio input and output interface 4215, a data communication bus 4216, an external device interface 4217, a general interface 4218, a USB controller 42113, a network card controller 42114 and an ATA interface 42115.

The processing units are responsible for executing the communication and instruction signal received and processing the audio/video signal received. For instance, the streaming media processing unit 4219 is responsible for processing the streaming media data received. The video processing unit 42110 is responsible for processing a video signal. The audio processing unit 42111 is responsible for processing an audio signal. The graphics processing unit 42112 is responsible for producing a graphics program interface such as program menu or producing a user interface such as learning picture, entertaining picture or electronic game picture, etc.. The central processing unit 4211 is responsible for controlling all processing units and interface units, and receiving and executing the input communication and instruction signal.

The interface units are responsible for data communication and transmission internally, externally and between units. For instance, the static memory interface 4212 is responsible for a read-write operation on the static memory 4232. The dynamic memory interface 4213 is responsible for a read-write operation on the dynamic memory 4231. The video input and output interface 4214 is responsible for input and output operations on the video signal. The audio input and output interface 4215 is responsible for input and output operations on the audio signal. The data communication bus 4216 is responsible for the operations on the communication and instruction signal and the data communication between the respective internal units. The external device interface 4217 is responsible for communication and data transmission between the function extension module 421 and the external device. The general interface 4218 supports not only a common interrupting and inquiring low speed data transmission mode but also a DMA (Direct Memory Access) high speed data transmission mode, and supports various types of I/O ports, which may satisfy a plurality of application requirements. The USB controller 42113 is responsible for reading an external USB data or performing data writing on an external USB device. The network card controller 42114 is responsible for communication and data transmission with the external network. And the ATA interface 42115 is responsible for performing a read-write operation on devices such as the card reader, the hard disk and the optical driver.

As shown in Fig.3 and Fig.4, standardization of the extension card 42 according to the present invention may be adapted to a wider area and more manufacturers. Moreover, the function configuration is free and flexible, and the cost is relatively low when a standard modularized design on each function unit or interface. The function units or interfaces may be combined as required in product designing, whereby a sufficient space is reserved for additional application of new functions, modules or interfaces in the future, and every thing, no matter in aspects of interface specification or software upgrading, etc., is ready for joining future modules with the existing modules. The modules to be newly added in future can be directly added as being the same interface specification and conforming to the unified protocol specification. In addition, the whole system software may be updated and upgraded in a plurality of manners such as an USB interface or a network interface.

Several application types of the extension card according to the present invention will be described as follows.
1. Digital integrated extension card: a function extension module of the digital integrated extension card 421 includes a set-top box chip for receiving digital interactive TV program signal. External interfaces of the digital integrated extension card 422 include an RF interface (cable TV interface), a network interface and an HDMI interface. The cable digital high definition signal may be received using the digital integrated extension card without connecting to a set-top box.
2. High definition recordable module card: a function extension module 421 of the high definition recordable module card includes a video processing unit, an audio processing unit, a USB controller and an ATA interface for converting a TV program to a video file and store the same into a Flash chip. External interfaces of the high definition recordable module card 422 include a USB interface and an IDE/ATA/SATA interface, and may be connected to a USB memory or a mobile hard disk so as to store the video file. The high definition recordable module card may further include a timer, and the user may choose to record the TV program either by instant recording or timing recording. In addition, the user may also download a high definition video file such as MPEG (Motion Picture Expert Group) or a TS stream from the web and play the same using the high definition recordable module card.
3. Learning and entertaining module card: a function extension module of the learning and entertaining module card 421 includes a central processing unit and a graphics processing unit, the static memory 4232 stores programs such as poem recitation with pictures, English learning materials and electronic games, and the external interface 422 includes a game console interface. The central processing unit and the graphics processing unit may execute the programs stored in the static memory 4232 according to the option of user(s), and plays an executing result, including graphics menu, audio signal and video signal, through the TV set 40.

It should be appreciated that the above-mentioned descriptions on the extension cards intend to make it easier for the person skilled in the art to understand the present invention. And the extension cards according to the present invention may not be limited to the above structures, while various types of new function units and interface units may be added to the extension cards. The person skilled in the art may also carry out a combined design of the function units and interface units of the extension cards as well as other function modules as required.

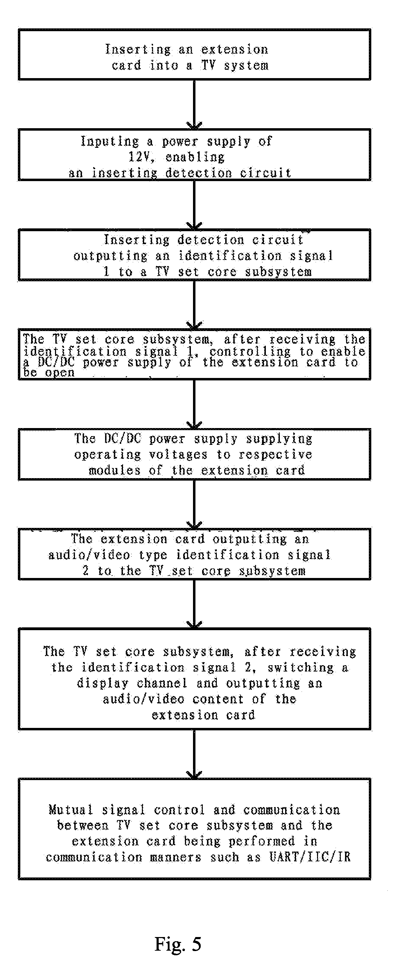

Here, a controlling method of the present invention will be described in detail with reference to Fig. 3 and Fig. 5. Fig. 5 is a flow chart showing a method for controlling a TV set provided in the present invention. Firstly, the extension card 42 is inserted into the TV set 40. When the socket terminal 432 on the extension card is inserted into the socket notch 431, their conductive parts contact with each other to form an electrical connection. Thus, an operating voltage provided from the power supply module 44 is input into the extension card 42 through the socket terminal 432 and the socket notch 431 so that an inserting detection circuit is enabled. The inserting detection circuit may be provided on the extension card, the power supply module 42 or the TV set core subsystem 41, and is located on a current loop consisted of the socket terminal 432 and the socket notch 431. The current loop is turned on when the socket terminal 432 and the socket notch 431 are electrically connected and the inserting detection circuit outputs an identification signal 1 to the TV set core subsystem 41. After receiving the identification signal 1, the TV set core subsystem 41 controls to enable the DC/DC power supply 424 of the TV function extension assembly 32 through the communication and control signal. The DC/DC power supply 424 supplies an operating voltage to respective modules on the extension card 42 to enable the extension card 42.

In preferred embodiments of the present invention, the identification signal 1 output from the inserting detection circuit corresponds to the function type of the extension card 42. It does not only indicate that the extension card 42 has been inserted into the TV set and is electrically connected with the TV set core subsystem 41, but also inform the TV set core subsystem 41 of the function type of the extension card, for instance, digital integrated extension card, high definition recordable module card or learning and entertaining module card. For example, the identification signal 1 may represent extension cards of different function types as a set of binary codes.

Subsequently, the extension card 42 outputs an audio/video type signal identification 2 to the TV set core subsystem 41. The audio/video type signal identification 2 may represent types of signals output from the external interfaces 422 to the extension card 42 as a set of binary codes. These signals include Radio Frequency (RF), Composite Video Broadcast Signal (CVBS), luminance/chrominance signal (Y/C), color difference signal (Y/Pb/Pr), VGA (Video Graphics Array) signal, DVI (Digital Visual Interface) signal, HDMI (High Definition Multimedia Interface) signal and other existing audio/video signals.

The TV set core subsystem 41, after receiving the identification signal 2, switches a corresponding display channel and outputs an audio/video content of the extension card 42. The mutual signal control and communication between TV set core subsystem 41 and the extension card 42 are performed in communication manners such as UART/IIC/IR.

Thereafter, the user may use a remote controller to choose whether the TV set 40 receives programs in a common TV receiving mode or an extension card mode. An infrared instruction sent by the remote controller, after being received and decoded by the TV set 40, may be transmitted to the TV set core module 411. The TV set core module 411 processes the transmitted instruction into a control instruction for transmitting to the function extension module 421 of the extension card through the gold finger connector 43 so as to perform a corresponding operation. As the function extension module 421 of the extension card 42 has an external device interface 4217 that may receive an IR instruction, the remote controller also may directly communicate with the extension card 42 so as to control operation thereof.

Though preferred embodiments of the present invention are disclosed for the sake of illustration, the person ordinarily skilled in the art should realize that, without departing from the scope and spirit of the present invention disclosed by the attached Claims, it is possible to make various improvements, additions and substitutions.

## Claims

1. A TV function extension assembly, **characterized in that** the TV function extension assembly is electrically connected with a core circuit of a display apparatus through a gold finger connector, which comprises:
a function extension module, electrically connected with the core circuit of the display apparatus through the gold finger connector for mutual communication and data transmission;
an external interface, connected between the function extension module and an external device or external network to enable mutual communication and data transmission between the function extension module and the external device or external network; and
a memory, connected with the function extension module to store data transmitted by the function extension module.

2. The TV function extension assembly according to claim 1, **characterized in that** the gold finger connector comprises:
a first connecting end, provided on the TV function extension assembly and comprising a first power supply signal terminal, a first communication signal terminal and a first audio/video signal terminal; and
a second connecting end, electrically connected with a core system of the display apparatus and comprising a second power supply signal terminal, a second communication signal terminal and a second audio/video signal terminal configured to be electrically connected with corresponding first power supply signal terminal, first communication signal terminal and first audio/video signal terminal of the first connecting end, respectively.

3. The TV function extension assembly according to claim 2, **characterized in that** the first connecting end is a socket terminal, the second connecting end is a socket notch, and the socket notch clamps and is electrically connected with the socket terminal.

4. The TV function extension assembly according to claim 2, **characterized in that** the first connecting end is a socket notch, the second connecting end is a socket terminal, and the socket notch clamps and is electrically connected with the socket terminal.

5. The TV function extension assembly according to claim 2, **characterized in that** the function extension module, the external interface and the memory are provided on a printed circuit board.

6. The TV function extension assembly according to claim 5, **characterized in that** the first connecting end comprises a gold finger socket member made of the printed circuit board.

7. The TV function extension assembly according to claim 1, **characterized in that** the function extension module comprises a set-top box chip.

8. The TV function extension assembly according to claim 1, **characterized in that** the function extension module comprises any one or a combination of at least two selected from a streaming media processing unit, a video processing unit, an audio processing unit and a graphics processing unit.

9. The TV function extension assembly according to claim 1, **characterized in that** the external interface comprises any one or a combination of at least two selected from a Universal Serial Bus interface, a network interface and a card reader interface.

10. The TV function extension assembly according to claim 1, **characterized in that** the display apparatus comprises a TV set.
